# EUROPÄISCHE PATENTANMELDUNG

(11) **EP 2 266 724 A1**
(43) Veröffentlichungstag der Anmeldung: **29.12.2010**
(21) Anmeldenummer: 10002598.0
(22) Anmeldetag: 12.03.2010
(51) Int. Cl.: B21J 15/32, B23P 19/00

(54) **Vorrichtung zur Bereitstellung von Befestigungselementen für ein Fertigungswerkzeug und Fertigungswerkzeug**

(30) Priorität: 22.06.2009 DE 102009030103
(71) Anmelder: Tox Pressotechnik GmbH & Co. KG, 88250 Weingarten (DE)
(72) Erfinder: Badent, Michael, 88250 Weingarten (DE)
(74) Vertreter: Dobler, Markus

(57) **Zusammenfassung**

Die Erfindung betrifft ein Fertigungswerkzeug und eine Vorrichtung zur Bereitstellung von Befestigungselementen für ein Fertigungswerkzeug (1), welches zum Verarbeiten eines Befestigungselements an einem Bearbeitungsabschnitt eines Werkstoffes ausgebildet ist, wobei die Vorrichtung eine aus einem Hauptspeicher ladbare-Weicheneinheit (7) zum Bereitstellen von Befestigungselementen aufweist, wobei ein Befestigungselement über eine Zuführleitung (11) einem Werkzeugkopf (2) des Fertigungswerkzeugs (1) für eine Verarbeitung zuführbar ist. Erfindungsgemäß umfasst die Weicheneinheit (7) mehrere Weichenmodule (8, 9, 10), von denen jedes Weichenmodul (8, 9, 10) einen Leitungsabschnitt der Zuführleitung (11) für die Befestigungselemente bereitstellt, wobei die Leitungsabschnitte in Reihe geschaltet sind.

## Beschreibung

### Stand der Technik:

Fertigungswerkzeuge mit Vorrichtungen zur Bereitstellung von Befestigungs- bzw. Verbindungselementen zum Beispiel Werkzeuge zum Verbinden von Werkstücken, sind bekannt. Derartige Werkzeuge sind beispielsweise Nietwerkzeuge zum Vernieten von Blech- oder Profilteilen durch das Vollstanznieten, Halbhohlstanznieten oder Clinchnieten. Dabei wird in der Regel ein so genannter Nietsetzkopf eingesetzt, der ein Hilfsfügeteil bzw. ein Niet an die Fügestelle führt und in das Werkstück setzt. Beispielsweise in der Automobilindustrie werden im Bereich des Karosseriebaus unterschiedliche Blechpaarungen bearbeitet bzw. gefügt, so dass unterschiedliche Befestigungselemente verarbeitet werden müssen. Um die unterschiedlichen Befestigungselemente bzw. Nieten an einem Werkzeug bereitzustellen, werden diese in einer definierten Reihenfolge nacheinander angeordnet vorgelegt. Das jeweilige Befestigungselement wird einzeln einem Werkzeugkopf zugeführt bzw. zugeschossen, wobei die Bevorratung von unterschiedlichen Befestigungselementen in Magazinen erfolgen kann.

### Aufgabe und Vorteile der Erfindung:

Aufgabe der vorliegenden Erfindung ist es, ein Fertigungswerkzeug im Hinblick auf einen flexiblen Einsatz des

Fertigungswerkzeugs bzw. unter wirtschaftlichen Gesichtspunkten zu verbessern.

Diese Aufgabe wird durch die unabhängigen Ansprüche gelöst.

In den abhängigen Ansprüchen sind vorteilhafte Weiterbildungen der Erfindung aufgezeigt.

Die Erfindung geht zunächst aus von einer Vorrichtung zur Bereitstellung von Befestigungselementen für ein Fertigungswerkzeug, welches zum Verarbeiten eines Befestigungselements an einem Bearbeitungsabschnitt eines Werkstoffes ausgebildet ist, wobei die Vorrichtung eine aus einem Hauptspeicher ladbare Weicheneinheit zum Bereitstellen von Befestigungselementen aufweist, wobei ein Befestigungselement über eine Zuführleitung einem Werkzeugkopf des Fertigungswerkzeugs für eine Verarbeitung zuführbar ist.

Ein wesentlicher Aspekt der Erfindung liegt darin, dass die Weicheneinheit mehrere Weichenmodule umfasst, von denen jedes Weichenmodul einen Leitungsabschnitt der Zuführleitung für die Befestigungselemente bereitstellt, wobei die Leitungsabschnitte in Reihe geschaltet sind.

Mit der erfindungsgemäßen Vorrichtung können insbesondere viele unterschiedliche fertigungstechnische Vorgänge bzw. Bearbeitungsaufgaben vorteilhaft und wirtschaftlich durchgeführt werden. Es ist erfindungsgemäß verbessert möglich beispielsweise in der Automobilindustrie im Bereich des Karosseriebaus unterschiedliche Blechpaarungen zu fügen bzw. mit Befestigungselementen unterschiedlichster Art zu versehen. Insbesondere können wesentliche Kosteneinsparungen bezüglich der Betriebsmittel erzielt werden. Die vorgeschlagene Anordnung ermöglicht es Störungen bzw. Fehler aufgrund falsch oder nicht bereitgestellter Befestigungselemente auszuschließen bzw. zu minimieren. Durch die Reihenschaltung der einzelnen Weichenmodule kann die Zuführleitung einfacher ausgestaltet werden, wobei es möglich ist, zwei Weichenmodule oder eine Vielzahl von Weichenmodulen am Werkzeug vorzusehen. Das vergleichsweise aufwändige Einrichten von vorinstallierten Andockstellen an der Zuführleitung, wobei eine Andockstelle zur Anbindung jeweils eines Weichenmoduls vorgesehen ist, in einer Anzahl, welche der maximal zu erwartenden Anzahl von Weichenmodulen in der Praxis entspricht, ist nicht notwendig.

Mit einem angebrachten Weichenmodul wird sozusagen die Zuführleitung verlängert. Der damit gebildete Verlängerungsabschnitt verlängert insbesondere einen Leitungsabschnitt der Zuführleitung, der sich an das Weichenmodul zuführseitig und abführseitig, bezogen auf die Zuführleitung für ein Befestigungselement, anschließt.

Der angebrachte Verlängerungsabschnitt bildet insbesondere ein Zwischen- oder Verbindungsabschnitt zwischen einem werkzeugkopfseitig an die Weicheneinheit anschließenden Leitungsabschnitt der Förderleitung und einem zur Fördereinrichtung an der Weicheneinheit anschließenden Leitungsabschnitt der Förderleitung, wobei durch den zur Fördereinrichtung an der Weicheneinheit anschließenden Leitungsabschnitt keine Befestigungselemente gefördert werden, sondern dieser zur Durchführung eines Fördermediums wie z. B. Druckluft dient.

Der werkzeugkopfseitig an die Weicheneinheit anschließende Abschnitt wird insbesondere ausschließlich durch einen Leitungsabschnitt der Förderleitung gebildet. Ein Befestigungselement gelangt daher insbesondere ohne Unterbrechung und/oder ohne Passieren eines weiteren zwischengeschalteten Elements von der Weicheneinheit bis zum Werkzeugkopf bzw. bis zu einer Parkposition unmittelbar am Werkzeugkopf. Der Abschnitt von der Weicheneinheit bis zum Werkzeugkopf ist insbesondere durch eine flexible Leitung z. B. einen Gummischlauch gebildet.

Jedes Weichenmodul bringt mit der Anbringung an der Förderleitung seinen eigenen Leitungsabschnitt der Förderleitung zur Förderung des eigenen Befestigungselements mit, wobei durch diesen Leitungsabschnitt auch Befestigungselemente passieren, welche aus dem oder den Weichenmodul(en) stammen, die auf dem förderseitigen Leitungsabschnitt vor dem betrachteten Weichenmodul positioniert sind.

Je nach Anzahl der in der Weicheneinheit befindlichen Weichenmodule ergibt sich eine unterschiedliche Länge der Förderleitung bzw. des mit der Weicheneinheit gebildeten Förderleitungsabschnitts, weshalb die einzelnen Leitungsabschnitte jedes Weichenmoduls möglicht kurz gehalten wird, z. B. wenige Zentimeter betragen kann.

Bevorzugt ist in einem Weichenmodul wenigstens ein Befestigungselement speicherbar. So kann mit den mehreren Weichenmodulen einer Weicheneinheit jeweils ein Befestigungselement der unterschiedlichen benötigten Befestigungselementen bereitgestellt werden, womit jederzeit und flexibel auf die anstehende Verbindungsaufgabe angepasst die gesamte Palette der zu verarbeitenden Befestigungselemente schnell an den Werkzeugkopf gefördert werden kann. Vorteilhafterweise kann in einem Weichenmodul eine Vielzahl gleicher Befestigungselemente gespeichert werden. Damit können in den unterschiedlichen Weichenmodulen entsprechend der Anzahl der vom Inhalt sich unterscheidenden Weichenmodule viele unterschiedliche Befestigungselemente bzw. Arten von Befestigungselementen beispielsweise unterschiedliche Nietlängen bereitgestellt werden.

Eine vorteilhafte Modifikation der Erfindung zeichnet sich dadurch aus, dass jedes Weichenmodul einen eigenen mit der Zuführleitung verbundenen Verbindungsabschnitt aufweist, über welchen ein Befestigungselement aus dem jeweiligen Weichenmodul zur Zuführleitung gelangt, wobei jedes Weichenmodul über eine separate Versorgungsanordnung mit Befestigungselementen aus dem Hauptspeicher versorgt wird. Damit ist es mit hoher Zuverlässigkeit möglich, unterschiedliche Befestigungselemente separat bereitzustellen bzw. deren Zuführung unabhängig von der Zuführung der anderen Weichenmodule zu ermöglichen.

Vorteilhafterweise können die mehreren Weichenmodule, die beispielsweise als Zuführeinheiten für das Zuführen oder Zuschießen der Befestigungselemente ausgebildet sind, an einem Fertigungswerkzeug beispielsweise an einer Roboterzange vorteilhaft angeordnet und mitgeführt werden. Durch die mit den Weichenmodulen bereitstellbare Weicheneinheit stehen immer ausreichend viele und über kurze Förderstrecken lieferbare Befestigungselemente zur Verfügung. Insbesondere lassen sich störend lange Zuführanordnungen an dem Fertigungswerkzeug vermeiden. Vorteilhaft kann damit eine nachteilige Störkontur nicht entstehen. Die Weicheneinheit kann eng an einem Fertigungswerkzeug bzw. einem Gehäuseabschnitt platziert werden. Insbesondere an einer idealen Position bezüglich einem gewünschten kurzen Abstand zum Werkzeugkopf aber ausreichend weit entfernt von Bereichen, welche im Hinblick auf eine Störkontur für das Bewegen des arbeitenden Fertigungswerkzeugs im Raum problematisch sind. Die am Werkzeug vorhandenen Weichenmodule können jeweils gleichartig oder individuell unterschiedlich sein, insbesondere abgestimmt sein auf unkritische Abmessungen bzw. notwendige Speicherkapazitäten für enthaltene Befestigungselemente.

Weiter wird vorgeschlagen, dass Anschlussmittel derart ausgebildet sind, dass jedes Weichenmodul der mehreren Weichenmodule als vereinzelbares Modul in der Weicheneinheit eingebaut ist. Insbesondere kann die Weicheneinheit erfindungsgemäß aus einzelnen Weichenmodulen zusammensteckbar bzw. kaskadierbar aufgebaut sein. Die Anschlussmittel sind insbesondere so gestaltet, dass die Weicheneinheit mehrere Weichenmodule von gleichartigen Weichenmodulen in Reihe geschaltet umfasst.

Die Weichenmodule sind vorteilhaft insbesondere im Hinblick auf die Anschlussmittel übereinstimmend ausgebildet.

Die Anschlussmittel können so aufgebaut sein, die Weicheneinheit mit Weichenmodulen bildbar ist, die hinsichtlich der Anschlussmittel gleichartig ausgebildet sind. Diese Weichenmodule können bezüglich der anderen Eigenschaften, welche nicht die Anschlussmittel betreffen, ebenfalls gleichartig aufgebaut sein, insbesondere was die Abmessungen bzw. die äußere Form betrifft. Es sind aber auch abgesehen von den Anschlussmitteln unterschiedlich gestaltete Weichenmodule in der Weicheneinheit einsetzbar.

Es ist überdies vorteilhaft, dass die Anschlussmittel ausgestaltet sind, die Weicheneinheit durch Aufnahme eines weiteren entsprechenden Weichenmoduls zu erweitern. Die Anschlussmittel können so gestaltet sein, dass zum Beispiel die Weichenmodule durch Schnellverbindungsmittel bzw. lösbare und sicherbare Rast- oder Steckverbindungen an entsprechenden Abschnitten anbaubar sind, um die Weicheneinheit zu bilden bzw. zu erweitern oder zu verkleinern, insbesondere um unterschiedliche Arten von Befestigungselementen in der Weicheneinheit vorteilhaft bereitzustellen.

So kann auf einfache Weise und individuell ein Fertigungswerkzeug mit unterschiedlichen Arten von Befestigungselementen, die jeweils artgleich in den jeweiligen unterschiedlichen Weichenmodulen bereitgestellt sind, ausgerüstet werden. Eine Zuführanordnung zum Werkzeugkopf umfasst neben einer z. B. pneumatischen Fördereinrichtung die Zuführ- bzw. Versorgungsleitung insbesondere genau eine Zuführleitung, über welche ein Befestigungselement von einer Übergabestelle an einem Weichenmodul, z. B. pneumatisch oder auf andere Weise zum Werkzeugkopf gefördert wird. Das Fördern eines Befestigungselements von einer Position in einem Speichervolumen innerhalb des Weichenmoduls zu der Übergabestelle kann mit der Fördereinrichtung der Zuführanordnung oder bevorzugt auf andere Weise erfolgen, insbesondere mechanisch mit einem hin- und hergehenden Schiebeelement.

Weiter ist es vorteilhaft, dass die Anschlussmittel derart ausgebildet sind, aus der Weicheneinheit ein beliebiges Weichenmodul zu entfernen und die verbleibenden Weichenmodule zu einer funktionsfähigen Weicheneinheit umzubauen. Damit können auch mehrere Weichenmodule aus einer erfindungsgemäßen Weicheneinheit einzeln oder auch in einem Verbund von mehreren zusammengebauten Weichenmodulen entfernt werden. Die zusammengesetzten Weichenmodule lassen somit nicht nur eine einfache Erweiterung der Weicheneinheit zu, sondern auch eine Verkleinerung, was eine individuelle und schnelle Anpassung des Fertigungswerkzeugs an den jeweiligen Einsatzfall erleichtert.

Weiter wird vorgeschlagen, dass ein Weichenmodul derart ausgestaltet ist, ein in dem Weichenmodul in einer Warteposition vorgelegtes Befestigungselement an die Zuführleitung zu übergeben. Für die gezielte Zuführung des gewünschten Befestigungselements muss dieses aus einem Weichenmodul in die Zuführleitung gelangen. Hierfür sind unterschiedliche pneumatische und/oder hydraulische Systeme einsetzbar, die insbesondere in dem Weichenmodul selbst vorhanden sind..

Bevorzugt weist ein Weichenmodul Übergabemittel mit einem mechanisch arbeitenden Einschubelement auf, die zur Übergabe eines in dem Weichenmodul in der Warteposition vorgelegten Befestigungselements an die Zuführleitung dienen. Beispielsweise kann ein mechanisch arbeitendes, hin- und herbewegbares Schiebeelement vorgesehen sein, welches ein definiertes Befestigungselement, zum Beispiel ein erstes aus einer Warteschlange im Weichenmodul, aus einer in dem Weichenmodul vorgelegten Menge von Befestigungselementen in eine Übergabeposition in der Zuführleitung fördert.

Das Schiebeelement kann z. B. ein in einem Kolben bewegbar aufgenommener Schieber sein, der eine mechanische Förderung ermöglicht, z. B. pneumatisch oder hydraulisch betrieben.

Es ist überdies vorteilhaft, dass ein Speichervolumen für in einem Weichenmodul vorgelegte Befestigungselemente durch einen Leitungsabschnitt gebildet ist, in welchem die Befestigungselemente positionierbar sind. Die vorgelegten Befestigungselemente können somit platzsparend untergebracht werden, insbesondere aneinander gereiht sein, z. B. in Längsrichtung des Leitungsabschnitts unmittelbar hintereinander ohne Abstand zueinander. Außerdem wird mit dem Leitungsabschnitt bzw. dessen Innenwandungen eine Führung für die zu bewegenden Befestigungselemente bereitgestellt.

Weiter ist es vorteilhaft, dass jedes Weichenmodul mit einer eigenen Anschlusseinheit verbunden ist, wobei jede Anschlusseinheit über eine eigene Verbindung zum Hauptspeicher verfügt. So kann beispielsweise eine Leitung von jedem Weichenmodul zu einer Übergabestelle bzw. einer Andockstelle führen, aus welcher der Hauptspeicher getrennt nach sortengleichen Befestigungselementen die Weichenmodule jeweils mit den entsprechenden Befestigungselement bzw. der entsprechenden Art des Befestigungselements versorgt. Die Übergabestellen können fest an dem Fertigungswerkzeug in einem Bereich angeordnet sein, welcher unkritisch im Hinblick auf eine störende Kontur für ein Arbeiten des z. B. an einem Roboterarm aufgenommenen Werkzeugs ist.

Vorteilhafterweise sind einem Weichenmodul Sensormittel zugeordnet, mit denen die Anzahl der in dem betreffenden Weichenmodul vorgelegten Befestigungselemente bestimmbar ist. So kann jederzeit zu jedem Weichenmodul die aktuelle vorgelegte bzw. gespeicherte Anzahl der Befestigungselemente erfasst, angezeigt und ggf. einer zentralen Kontrolleinheit für die Steuerung des Fertigungswerkzeug übermittelt werden. Insbesondere kann rechtzeitig aus einem Hauptspeicher ein Nachfüllen mit Befestigungselementen erfolgen. Die Sensormittel können an einen Leitungsabschnitt anschließen, der den Hauptspeicher mit dem betreffenden Weichenmodul verbindet.

Es ist überdies vorteilhaft, dass ein Sensor vorhanden ist, mit dem ein dem Werkzeugkopf zugeführtes und am Werkzeugkopf vorgelegtes Befestigungselement detektierbar ist. So kann exakt am Werkzeugkopf bzw. unmittelbar vor der Verarbeitung des Befestigungselements durch das Fertigungswerkzeug das Vorhandensein eines Befestigungselementes, das als nächstes verarbeitet wird, erkannt werden. Eine Fehlladung bzw. ein versehentlich nicht am Werkzeugkopf angekommenes bzw. vorhandenes Befestigungselement kann dadurch ausgeschlossen werden.

Außerdem ist es bevorzugt, wenn eine Kontrolleinheit zur separaten Kontrolle jedes in der Weicheneinheit vorhandenen Weichenmoduls vorgesehen ist. So kann individuell für jedes Weichenmodul eine Kontrolle bzw. Überwachung bzw. Ansteuerung erfolgen.

Die Erfindung betrifft außerdem ein Fertigungswerkzeug, insbesondere ein Nietwerkzeug, welche eine der oben genannten Anordnungen bzw. Vorrichtungen aufweist. Damit lassen sich die bereits oben erläuterten Vorteile für ein entsprechendes Fertigungswerkzeug insbesondere ein Nietwerkzeug zum Vernieten von Blechen, z. B. durch Vollstanznieten, Halbhohlstanznieten oder Clinchnieten realisieren.

### Figurenbeschreibung:

Weitere Vorteile und Merkmale der Erfindung werden anhand eines in den Figuren gezeigten Ausführungsbeispieles eines erfindungsgemäßen Fertigungswerkzeuges näher erläutert. Im Einzelnen zeigt:
- Figur 1: einen Teil eines erfindungsgemäßen Fertigungswerkzeugs in perspektivischer Ansicht,
- Figur 2: einen vergrößerten Ausschnitt eines Teils des in Figur 1 gezeigten Fertigungswerkzeugs und
- Figur 3: eine perspektivische Schnittdarstellung des in Figur 2 gezeigten Teils.

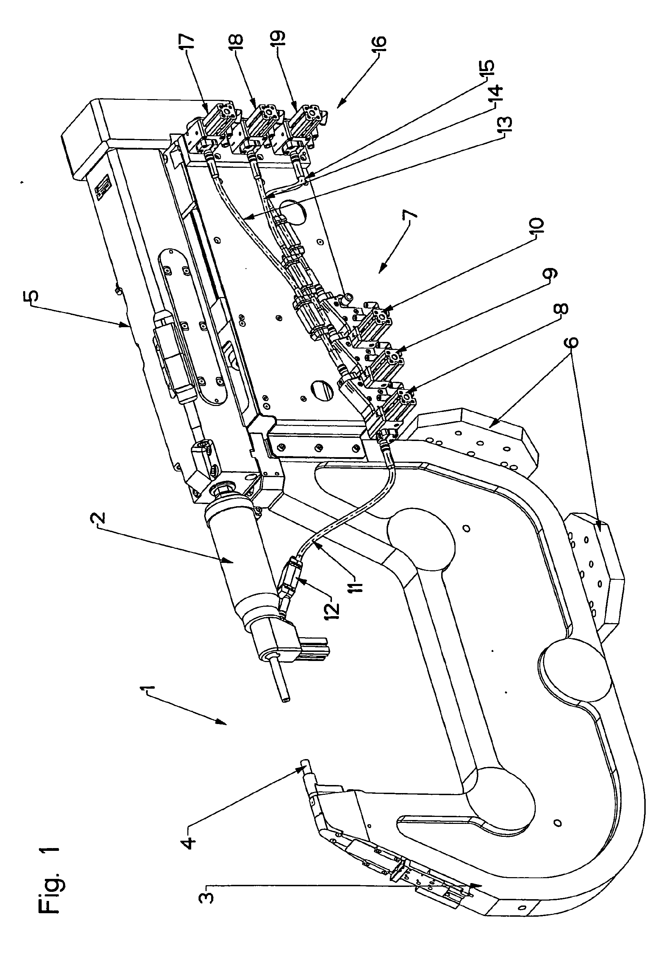

Figur 1 zeigt schräg von oben ein erfindungsgemäßes Fertigungswerkzeug, welches beispielhaft als Nietwerkzeug bzw. als so genannte Nietzange 1 ausgebildet ist. Die Nietzange 1 dient insbesondere zum Vernieten von Blechen, z. B. durch ein Vollstanzniet-, Halbhohlstanzniet- oder Clinchnietverfahren.

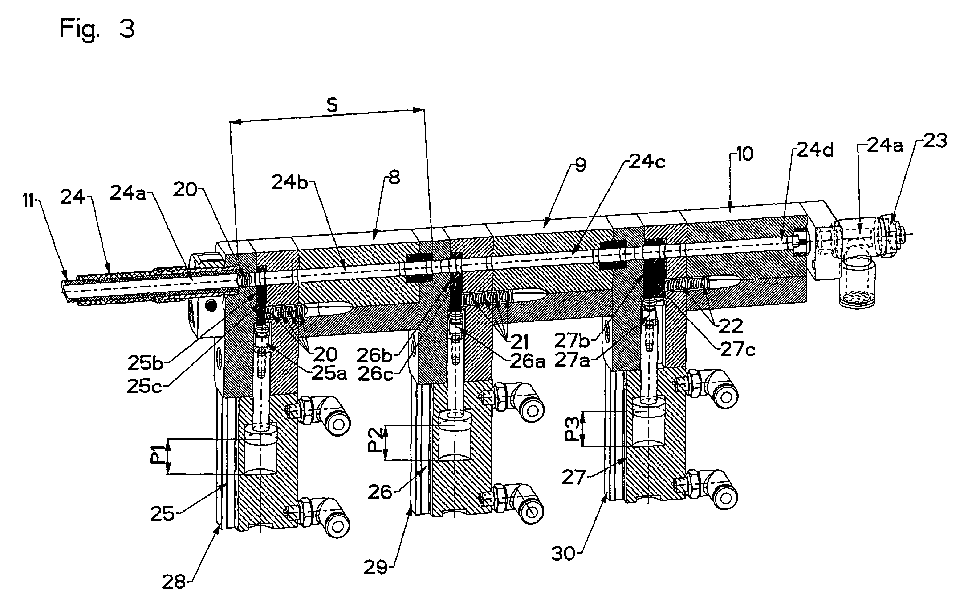

Die Nietzange 1 umfasst einen Nietsetzkopf 2, mit dem von bereitgestellten Nieten 20 bis 22 (siehe Figur 3) jeweils einzeln eine Niete an einer Fügestelle in ein entsprechendes Blechpaket (nicht gezeigt) bzw. in die zu vernietenden Bauteile eingebracht wird. Der vordere Teil der Nietzange 1 wird durch einen Bügel 3 gebildet, an welchem gegenüber dem Nietsetzkopf 2 über einen dazwischen vorhandenen Freibereich eine Matrize 4 vorhanden ist, welche mit einem bewegbaren und nicht dargestellten Stempel im vorderen Bereich des Nietsetzkopfes 2 zusammen wirkt. Zur Hin- bzw. Herbewegung des Stempels im Nietsetzkopf 2 ist ein Antrieb 5 an der Nietzange 1 vorhanden.

Die Nietzange 1 ist über einen Befestigungsabschnitt 6 an einer nicht gezeigten Werkzeugaufnahme beispielsweise eines robotergeführten Armes aufgenommen, womit es sich um eine Roboter-Nietzange handelt.

Die erfindungsgemäße Nietzange 1 verfügt über eine Weicheneinheit, die nachfolgend auch als Nietzuschießeinheit 7 bezeichnet wird, die modular aufgebaut ist und im dargestellten Fall drei in Reihe geschaltete Weichenmodule 8, 9 und 10 aufweist, wobei jedes Weichenmodul 8 bis 10 eine andere Art bzw. Länge einer Niet bereitstellt. Die Weichenmodule 8 bis 10, welche auch als Nietmagazine angesehen werden können, sind über eine Zuführleitung, die einen Zuführschlauch 11 und eine Versorgungsleitung 24 umfasst mit dem Nietsetzkopf 2 verbunden, um auf direktem und kurzem Wege einen passenden Niet aus einer der Weichenmodule 8, 9 und 10 zum Nietsetzkopf 2 zu bringen. Der Niet wird dann aus einer Warteposition unmittelbar am Nietsetzkopf 2 in eine Position gebracht, aus welcher der Niet über einen im Nietsetzkopf 2 geführt verfahrbaren Stempel in Richtung der Matrize 4 durch das (nicht dargestellte) Blechpaket gedrückt und dieses vernietet wird. Das Blechpaket befindet sich dabei im Freibereich zwischen dem Stempel 4 und dem Nietsetzkopf 2.

Am vorderen Ende des Zuführschlauches 11 im Nahbereich des Nietsetzkopfes 2 ist ein Füllstandsensor 12 vorhanden, welcher zur Erfassung bzw. Kontrolle dient, ob am Nietsetzkopf 2 ein Niet in der Warteposition vorgelegt ist.

Die Nietzuschießeinheit 7 bzw. jedes Weichenmodul 8, 9, 10 ist einzeln über Anschlussleitungen 13, 14 bzw. 15 mit einer Anschlusseinheit bzw. Dockingstation 16 verbunden. Die Dockingstation 16 umfasst entsprechend der Zahl der Weichenmodule 8, 9, 10 jeweils dazugehörige Untereinheiten 17, 18, 19.

Von jeder einzelnen Untereinheit 17 bis 19 geht eine nicht dargestellte Verbindung, insbesondere schlauchartige Verbindung, zu einem nicht gezeigten Hauptspeicher, in dem unterschiedliche Befestigungselemente bzw. Arten von Nieten vorgelegt sind. Jede Untereinheit 17 bis 19 versorgt jeweils ein Weichenmodul 8 bis 10 jeweils mit artgleichen Nieten, die in den Weichenmodulen 8 bis 10 bevorratbar sind. Grundsätzlich können in jedem Weichenmodul 8 bis 10 jeweils mehrerer Nieten bevorratet werden, wobei auch eine Bevorratung mit jeweils nur einem Niet nicht ausgeschlossen ist.

Für eine Anpassung der Zahl der Untereinheiten an die entsprechende Zahl der Weichenmodule, ist die Zahl der Untereinheiten beliebig z. B. durch Anstecken erweiterbar bzw. verringerbar. Der Hauptspeicher, der die Untereinheiten jeweils einzeln mit dazugehörigen Nieten versorgt, muss entsprechend ausgebildet sein, so dass zu allen eingesetzten Weichenmodulen jeweils ein Weichenmodul mit artgleichen Nieten versorgbar ist, die sich von Weichenmodul zu Weichenmodul unterscheiden. Die Anzahl von unterschiedlichen Arten von mit der Nietzange 1 verarbeitbaren Nieten ist durch die Anzahl der vorhandenen Weichenmodule bestimmt. Im vorliegenden Fall kann die Nietzange 1 drei unterschiedliche Nietenarten verarbeiten, da drei Weichenmodule 8 bis 10 vorhanden sind. Mit dem Begriff "Nietarten" sind gleich ausgebildete Nieten zu verstehen, die sich lediglich in der Größe unterscheiden, oder der Begriff "Nietarten" bezieht sich auf unterschiedlich gestaltete Nieten gleicher oder unterschiedlicher Größe.

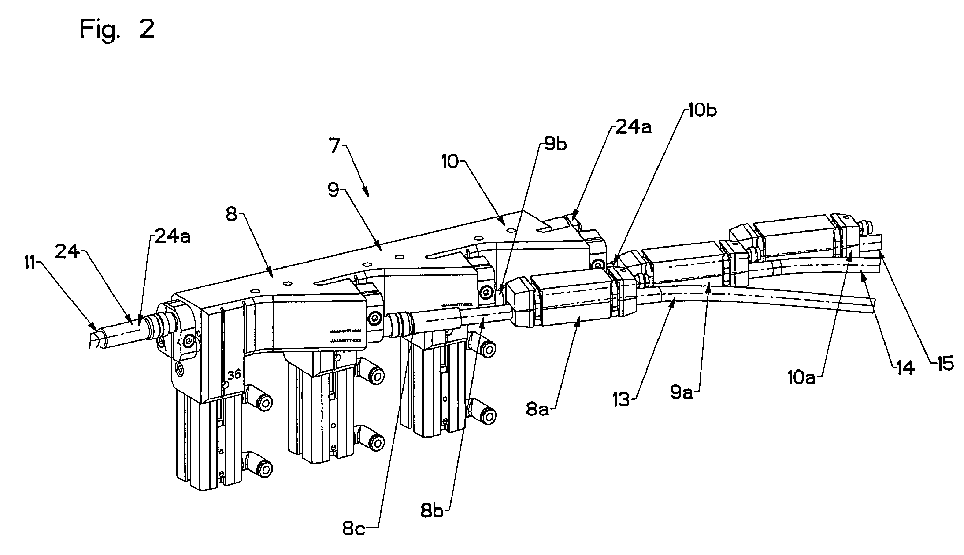

Figur 2 zeigt in vergrößerter Darstellung die Nietzuschießeinheit 7 mit Anschlussleitungen 13 bis 15 und mit Abschnitten des Zuführschlauches 11, der im Bereich der Weichenmodule 8 bis 10 in die Versorgungsleitung 24 bzw. einen Leitungsabschnitt 24a der Versorgungsleitung 24 übergeht. Wie aus Figur 2 weiter hervorgeht, umfasst jedes der Weichenmodule 8 bis 10 einen zugeordneten Füllstandsensor 8a, 9a bzw. 10a, welcher die in jeweiligen Verbindungsschläuchen 8b bis 10b vorgelegte Nieten der Weichenmodule 8 bis 10 erfasst bzw. den jeweiligen Füllstand überprüft. Die Verbindungsschläuche 8b bis 10b dienen als Speichervolumen für die Nieten, was besonders platzsparend ist und zudem eine definierte Orientierung der Nieten im Speichervolumen garantiert.

Gemäß Figur 3 sind jeweils mehrere unterschiedliche Nieten 20 bis 22 in den Einschusseinheiten 8 bis 10 hintereinender aufgereiht vorgelegt. Die Nieten 20 sind kürzer als die Nieten 21 und die Nieten 21 sind kürzer als die Nieten 22, um unterschiedlich dicke Blechpakete mit der Nietzange 1 vernieten zu können. Die Zahl der in einer Einschusseinheit 8 bis 10 vorgelegten Nieten kann variieren, z. B. von eins bis unter 10 Stück oder bis deutlich mehr als 30 Stück betragen. Ein Speichervolumen für die Nieten kann durch das Innere der Verbindungsschläuche 8b, 9b und 10b vorgegeben sein und/oder Abschnitte von anschließenden Adapterstücken umfassen, von denen ein Adapterstück 8c am Verbindungsschlauch 8b gemäß Figur 2 bezeichnet ist. Als Speichervolumen für die Nieten können zudem Abschnitte im Innern der blockartig gebildeten Hauptbauteile der Weichenmodule 8 bis 10 (siehe Figur 3) dienen, wobei in die betrachteten Abschnitte die Verbindungsschläuche 8b, 9b und 10b bzw. ggf. deren Adapterstücke münden.

In der über einen Druckluftanschluss 23 mit Druckluft beaufschlagbaren Versorgungsleitung 24, die sich aus Leitungsabschnitten 24a, 24b, 24c und 24d zusammensetzt, wird ein im Weichenmodul 8 gespeicherter Niet 20 in den Leitungsabschnitt 24b verschoben (siehe Figur 3) und von dort pneumatisch über den Leitungsabschnitt 24a und den Zuführschlauch 11 zum Nietsetzkopf 2 (Figur 1) gefördert, wobei für einer Einzelzuführung sich nur ein Niet in der Versorgungsleitung 24 befindet, und erst wenn dieser die Warteposition am Nietsetzkopf 2 erreicht hat eine nächste Niet aus einem der Weichenmodule 8 bis 10 in die Versorgungsleitung 24 geschoben wird.

Jedes Weichenmodul 8 bis 10 weist jeweils einen Leitungsabschnitt 24b bis 24d auf, welcher im angebrachten Zustand des betreffenden Weichenmoduls einen Abschnitt der Versorgungsleitung 24 zwischen den immer vorhandenen Anschlussabschnitten bildet, wobei die Anschlussabschnitte durch die Leitungsabschnitte 24a anschließend zum Zuführschlauch 11 bzw. zum Druckluftanschluss 23 gebildet werden. Jedes der Weichenmodule 8 bis 10 generiert somit eine Teilstrecke in der Versorgungsleitung 24, was für das Weichenmodul 8 in Figur 3 anhand der Teilstrecke s verdeutlicht ist, was der Länge des Leitungsabschnitts 24b entspricht.

Um den gewünschten Niet, z. B. gemäß Figur 3 der Niet 20 aus dem Speichervolumen des Weichenmoduls 8 in die Versorgungsleitung 24 bzw. den Leitungsabschnitte 24b zu bringen, ist in jedem der Weichenmodule 8 bis 10 eine mechanische Zuführanordnung 25 bis 27 vorgesehen. Hierfür wird ein z. B. pneumatisch oder hydraulisch bewegbarer Schieber 25a bis 27a der Zuführanordnungen 25 bis 27 nach oben bzw. nach unten gemäß der Doppelpfeile P1 bis P3 in den Weichenmodulen 8 bis 10 bewegt. Die Schieber 25a bis 27a sind jeweils in Einschubzylindern 28 bis 30 geführt bewegbar aufgenommen, wobei in Figur 3 die Schieber 25a bis 27a sich jeweils in der ganz nach unten gefahrenen Position befinden. Auf weitere Details der Zuführanordnungen 25 bis 27 bzw. der Schieber und daran vorhandener Anschluss- bzw. Verlängerungselemente wird nicht näher eingegangen.

Die in den einzelnen Weichenmodulen 8 bis 10 bzw. in deren Speichervolumen vorhandenen Nieten 20 bis 22, sind jeweils insbesondere parallel zur Ausrichtung der Versorgungsleitung 24 hintereinander aufgereiht vorgelegt. Mit den Schiebern 25a, 26a, 27a und ein jeweils damit verfahrbares Schiebestück 25c, 26c und 27c kann ein Niet 20, 21 oder 22 jeweils über einen kurzen Verbindungsabschnitt 25b, 26b, 27b über eine Lateral- bzw. Querbewegung seitlich versetzt, wobei die räumliche Orientierung der jeweiligen Längsachse der Nieten 20 bis 22 nicht verändert werden. Auf diese Weise sind sehr kurze Taktzeiten möglich und zudem ist eine Verkantungsgefahr beim Bewegen der Nieten 20 bis 22 in die Versorgungsleitung 24 minimiert.

Ein in der Versorgungsleitung 24 bzw. in dem Leitungsabschnitt 24b vorhandener Niet, zum Beispiel der Niet 20 gemäß Figur 3, wird anschließend exakt geführt pneumatisch durch Druckluft zum Nietsetzkopf bzw. in eine vom Füllstandsensor 12 überwachte Verarbeitungs- bzw. Warteposition gebracht.

Mit Hilfe von hier nicht näher dargestellten Sensoren kann die Stellung der jeweiligen Schieber 25a bis 27a abgefragt werden, um insbesondere eine prozesssichere Zuführung der Nieten zu gewährleisten. Die Schieber 25a bis 27a und die Schiebestücke 26c, 27c sind gemäß Figur 3 in der nach unten verfahrenen Position, wohingegen das Schiebestück 25c in der nur kurzzeitig beim Verschieben der Niet 20 nach oben eingenommenen oberen Position steht.

Die Nietzuschießeinheit 7 ist insbesondere so ausgebildet, dass nahezu beliebig viele Einheiten für jeweils unterschiedliche Arten von Nieten in der gebildeten Weicheneinheit untergebracht werden können. Grundsätzlich ist die Nietzuschießeinheit 7 mit den Weichenmodulen 8 bis 10 für andere Werkzeuge geeignet, in denen andere Befestigungselemente wie zum Beispiel Bolzen, Schrauben, Stanzmuttern, Schweißbolzen oder Schweißmuttern verarbeitet werden.

Vorteilhafterweise ist die Nietzuschießeinheit 7 so am Bereich der Nietzange 1 angebracht, dass keine Störkontur entsteht bzw. keine räumliche Behinderung bzw. Kollisionsgefahr durch die Nietzuschießeinheit 7 beim Arbeitseinsatz der Nietzange 1 auftritt.

Die kaskadierbaren Weichenmodule 8 bis 10 sind derart ausgebildet, dass sie von einer nicht dargestellten Kontroll- bzw. Steuereinheit angesteuert werden können.

Die erfindungsgemäße Nietzange 1 zeichnet sich insbesondere durch eine hohe Flexibilität für unterschiedliche Einsätze aus. Über die nicht dargestellte Kontroll- bzw. Steuereinheit kann steuerungsseitig eine freie Wahl der zu verarbeitenden Nietarten bzw. Nietlängen erfolgen. Eine Aufreihung in exakt vorgegebener Reihenfolge gemäß einer geplanten Abfolge der Verarbeitung von unterschiedlichen Nieten ist nicht erforderlich.

Die erfindungsgemäße Nietzange 1 mit der Nietzuschießeinheit 7 ist besonders kompakt ausbildbar.

Außerdem ist es vorteilhaft, dass durch die gleichartige Ausbildung der Weichenmodule 8 bis 10 eine wirtschaftliche bzw. kostengünstige Herstellung und Nutzung der Weichenmodule 8 bis 10 und damit der Nietzange 1 möglich ist.

### Bezugszeichenliste:

- 1: Nietzange
- 2: Nietsetzkopf
- 3: Bügel
- 4: Matrize
- 5: Antrieb
- 6: Befestigungsabschnitt
- 7: Nietzuschießeinheit
- 8, 9, 10: Weichenmodul
- 8a, 9a, 10a: Füllstandsensor
- 8b, 9b, 10b: Verbindungsschlauch
- 8c, 9c, 10c: Adapterstück
- 11: Zuführschlauch
- 12: Füllstandsensor
- 13, 14, 15: Anschlussleitung
- 16: Dockingstation
- 17, 18, 19: Untereinheit
- 20, 21, 22: Niet
- 23: Druckluftanschluss
- 24: Versorgungsleitung
- 24a, 24b, 24d: Leitungsabschnitt
- 25: Zuführanordnung
- 25a: Schieber
- 25b: Verbindungsabschnitt
- 25c: Schiebestück
- 26: Zuführanordnung
- 26a: Schieber
- 26b: Verbindungsabschnitt
- 26c: Schiebestück
- 27: Zuführanordnung
- 27a: Schieber
- 27b: Verbindungsabschnitt
- 27c: Schiebestück
- 28, 29, 30: Einschubzylinder

## Patentansprüche

1. Vorrichtung zur Bereitstellung von Befestigungselementen (20 - 22) für ein Fertigungswerkzeug (1), welches zum Verarbeiten eines Befestigungselements an einem Bearbeitungsabschnitt eines Werkstoffes ausgebildet ist, wobei die Vorrichtung eine aus einem Hauptspeicher ladbare-Weicheneinheit (7) zum Bereitstellen von Befestigungselementen (20, 21, 22) aufweist, wobei ein Befestigungselement (20, 21, 22) über eine Zuführleitung (11, 24) einem Werkzeugkopf (2) des Fertigungswerkzeugs (1) für eine Verarbeitung zuführbar ist, **dadurch gekennzeichnet, dass** die Weicheneinheit (7) mehrere Weichenmodule (8, 9, 10) umfasst, von denen jedes Weichenmodul (8, 9, 10) einen Leitungsabschnitt (24b, 24c, 24d) der Zuführleitung (11, 24) für die Befestigungselemente bereitstellt, wobei die Leitungsabschnitte (24b, 24c, 24d) in Reihe geschaltet sind.

2. Vorrichtung nach Anspruch 1, **dadurch gekennzeichnet, dass** in einem Weichenmodul (8, 9, 10) wenigstens ein Befestigungselement (20, 21, 22) speicherbar ist.

3. Vorrichtung nach Anspruch 1 oder 2, **dadurch gekennzeichnet, dass** jedes Weichenmodul (8; 9; 10) einen eigenen mit der Zuführleitung (24) verbundenen Verbindungsabschnitt (25b, 26b, 27b) aufweist, über welchen ein Befestigungselement (20, 21, 22) aus dem jeweiligen Weichenmodul (8; 9; 10) zur Zuführleitung (11, 24) gelangt, wobei jedes Weichenmodul (8; 9; 10) über eine separate Versorgungsanordnung (13, 14, 15, 17, 18, 19) mit Befestigungselementen aus dem Hauptspeicher versorgt wird.

4. Vorrichtung nach einem der vorhergehenden Ansprüche, **dadurch gekennzeichnet, dass** Anschlussmittel derart ausgebildet sind, dass jedes Weichenmodul (8; 9; 10) der mehreren Weichenmodulen (8, 9, 10) als vereinzelbares Modul in der Weicheneinheit (7) eingebaut ist.

5. Vorrichtung nach Anspruch 4, **dadurch gekennzeichnet, dass** die Anschlussmittel ausgestaltet sind, die Weicheneinheit (7) durch Aufnahme eines weiteren entsprechenden Weichenmoduls zu erweitern.

6. Vorrichtung nach einem der vorhergehenden Ansprüche 4 und 5, **dadurch gekennzeichnet, dass** die Anschlussmittel derart ausgebildet sind, aus der Weicheneinheit (7) ein beliebiges Weichenmodul zu entfernen und die verbleibenden Weichenmodule zu einer funktionsfähigen Weicheneinheit umzubauen.

7. Vorrichtung nach einem der vorhergehenden Ansprüche, **dadurch gekennzeichnet, dass** ein Weichenmodul (8; 9; 10) derart ausgestaltet ist, ein in dem Weichenmodul in einer Warteposition vorgelegtes Befestigungselement (20 - 22) an die Zuführleitung (11, 24) zu übergeben.

8. Vorrichtung nach einem der vorhergehenden Ansprüche, **dadurch gekennzeichnet, dass** ein Weichenmodul (8; 9; 10) Übergabemittel mit einem mechanisch arbeitenden Einschubelement (25a, 26a, 27a) aufweist, die zur Übergabe eines in dem Weichenmodul (8; 9; 10) in der Warteposition vorgelegten Befestigungselements (20 - 22) an die Zuführleitung (11, 24) dienen.

9. Vorrichtung nach einem der vorhergehenden Ansprüche, **dadurch gekennzeichnet, dass** ein Speichervolumen für in einem Weichenmodul (8; 9; 10) vorgelegte Befestigungselemente (20 - 22) durch einen Leitungsabschnitt gebildet ist, in welchem die Befestigungselemente (20 - 22) positionierbar sind.

10. Vorrichtung nach Anspruch 1, **dadurch gekennzeichnet, dass** jedes Weichenmodul mit einer eigenen Anschlusseinheit (16) verbunden ist, wobei jede Anschlusseinheit (16) über eine eigene Verbindung zum Hauptspeicher verfügt.

11. Vorrichtung nach einem der vorhergehenden Ansprüche, **dadurch gekennzeichnet, dass** einem Weichenmodul (8; 9; 10) Sensormittel (8a, 9a, 10a) zugeordnet sind, mit denen die Anzahl der in dem betreffenden Weichenmodul (8; 9; 10) vorgelegten Befestigungselemente (20 - 22) bestimmbar ist.

12. Vorrichtung nach einem der vorhergehenden Ansprüche, **dadurch gekennzeichnet, dass** ein Sensor (12) vorhanden ist, mit dem ein dem Werkzeugkopf (2) zugeführtes und am Werkzeugkopf vorgelegtes Befestigungselement detektierbar ist.

13. Vorrichtung nach einem der vorhergehenden Ansprüche, **dadurch gekennzeichnet, dass** eine Kontrolleinheit zur separaten Kontrolle jedes in der Weicheneinheit (7) vorhandenen Weichenmoduls (8; 9; 10) vorgesehen ist.

14. Fertigungswerkzeug, insbesondere Nietwerkzeug (1), mit einer Vorrichtung nach einem der vorhergehenden Ansprüche.
